# EUROPÄISCHE PATENTSCHRIFT

(11) **EP 1 850 998 B1**
(45) Veröffentlichungstag und Bekanntmachung des Hinweises auf die Patenterteilung: **05.09.2012**
(21) Anmeldenummer: 06704708.4
(22) Anmeldetag: 21.02.2006
(51) Int. Cl.: B23K 9/09

(54) **VERFAHREN ZUM STEUERN UND/ODER REGELN EINES SCHWEISSGERÄTES UND SCHWEISSGERÄT**
METHOD FOR CONTROLLING AND/OR REGULATING A WELDING DEVICE, AND WELDING DEVICE
PROCEDE DE COMMANDE ET/OU REGULATION D'UN DISPOSITIF DE SOUDAGE ET DISPOSITIF DE SOUDAGE

(30) Priorität: 25.02.2005 AT 3292005
(43) Veröffentlichungstag der Anmeldung: 07.11.2007
(73) Patentinhaber: Fronius International GmbH, 4643 Pettenbach (AT)
(72) Erfinder: ARTELSMAIR, Josef, A-4552 Wartberg/Krems (AT); BART, Gerald, A-4030 Linz (AT)
(74) Vertreter: Sonn & Partner Patentanwälte
(86) Internationale Anmeldenummer: PCT/AT2006/000066
(87) Internationale Veröffentlichungsnummer: WO 2006/089322

(56) Entgegenhaltungen:
- US-A- 5 225 660
- US-A- 5 317 116
- US-A- 5 726 419

## Beschreibung

Die Erfindung betrifft ein Verfahren zum Steuern und/oder Regeln eines Schweißgerätes bzw. einer Schweißstromquelle nach dem obergrift des Anspruchs 1.

Ein solches Verfahen ist im US 5 726 419 A offenbart. Weiters betrifft die Erfindung ein Schweißgerät nach dem Oberbegriff des Anspruchs 17.

Aus der EP 1 384 546 A2 ist ein Verfahren zum Steuern einer Schweißstromquelle bekannt, bei dem die Wellenform des Schweißstromes zumindest einen Lichtbogen- bzw. ARC-Anteil und einen Kurzschluss-Anteil aufweist. Während des Schweißprozesses wird eine Kurzschlussphase durch Vorwärtsbewegen des Schweißdrahtes bis zur Berührung des Werkstücks eingeleitet und eine Lichtbogenphase durch Zurückziehen des Schweißdrahtes eingeleitet. Der Kurzschluss-Anteil des Schweißstroms wird während der Kurzschlussphase angelegt, bevor der Schweißdraht zur Bildung eines Lichtbogens vom Werkstück abgehoben wird. Der Kurzschluss-Anteil weist dabei das Strommaximum in einer Periode des Schweißstroms auf, sodass in der Kurzschluss-Phase ein hoher Strom über den Schweißdraht und das Werkstück fließt. Der betragsmäßig niedrigere ARC-Anteil des Schweißstromes wird beim Rückzug der Elektrode unter Bildung des Lichtbogens angelegt. Es ist daher die Wellenform des Schweißstroms mit der Rückzugsbewegung des Schweißdrahtes koordiniert, wobei die Wellenform des Schweißstroms mehrere unterschiedliche Phasen aufweist.

Nachteil ist hierbei, dass zwar in dem Dokument sämtliche mögliche Schweißverfahren angeführt sind, jedoch in keiner Weise darauf eingegangen wird, wie diese Schweißverfahren im Bezug auf die Schweißdrahtbewegung angewendet werden können.

Eine zum Stand der Technik zählende Schweißstromquelle ist weiters aus der EP 1 384 547 A2 bekannt. Ein Verfahren und eine Vorrichtung zur Förderung eines Schweißdrahtes ist aus der EP 1 384 548 A1 bekannt. Eine Drahtfördervorrichtung ist aus der EP 1 384 549 A2 bekannt.

Als nachteilig hat sich bei den aus dem Stand der Technik bekannten Verfahren und Vorrichtungen erwiesen, dass die Steuerung bzw. Regelung der Wärmeeinbringung in den Schweißprozess nur in beschränktem Umfang möglich ist. Es erfolgt eine erhebliche Wärmeeinbringung im Bereich der Schweißstelle des Werkstücks, da der Schweißstrom zu jedem Zeitpunkt des Schweißprozesses auf einem gewissen Niveau gehalten werden muss, damit der Lichtbogen nicht abreißt. Durch die anliegende Stromstärke wird das Werkstück im Bereich der Schweißstelle stark erwärmt, wobei sich dies insbesondere in der Kurzschlussphase negativ auf die Schweißverbindung auswirkt, da in dieser Phase der betragsmäßig höhere Kurzschluss-Anteil des Schweißstroms anliegt. Die Möglichkeiten zur Steuerung der Wärmeeinbringung, insbesondere der Wärmereduktion, während eines Schweißprozesses sind bei den bekannten Verfahren somit begrenzt. Daraus ergibt sich der Nachteil, dass beispielsweise dünne Bleche mit einer Dicke im Bereich von wenigen Millimetern bzw. Zehntelmillimetern und/oder Werkstoffe mit niedrigem Schmelzpunkt, wie beispielsweise Aluminiumlegierungen, nur schlecht oder gar nicht schweißbar sind.

Die Aufgabe der vorliegenden Erfindung besteht in der Schaffung eines Verfahrens zum Steuern und/oder Regeln eines Schweißprozesses bzw. einer Schweißstromquelle, welches vielfältigere Möglichkeiten zur Steuerung der Wärmeeinbringung in das Werkstück bzw. der Einbringung von Zusatzwerkstoff zulässt und mit dem Anwendungsbereich des Schweißprozesses bzw. eines Schweißgeräts erweitert und der Schweißprozess flexibler gestaltet werden kann. Insbesondere soll die beim Schweißprozess entstehende Wärmeenergie reduziert werden

Eine weitere Aufgabe besteht in der Schaffung eines oben genannten Schweißgeräts, mit dem die Wärmeeinbringung in das Werkstück bzw. die Einbringung von Zusatzwerkstoff in flexibler Weise ermöglicht und dadurch der Anwendungsbereich erweitert werden kann.

Die erfindungsgemäße Aufgabe wird in verfahrensmäßiger Hinsicht dadurch gelöst, dass während zumindest einiger Kurzschlussphasen des Schweißprozesses die Polarität des Schweißstromes I und/oder der Schweißspannung U auf einen definierten Wert eingestellt wird, sodass ein Durchschmelzen des Schweißdrahtes bzw. einer Kurzschlussbrücke unterbunden, jedoch eine sichere Wiederzündung des Lichtbogens beim Abheben des Schweißdrahts vom Werkstück ermöglicht wird, indem am Ende der Kurzschlussphase bzw. am Beginn der Lichtbogenphase der Lichtbogen lediglich durch den Schweißstrom I und/oder die Schweißspannung U Hilfsspannungsquellen-los wieder gezündet wird. Vorteilhaft ist hierbei, dass durch den Wechsel der Polarität des Schweißstromes I, insbesondere bei gleichbleibender Schweißstromhöhe, der Wärmeeintrag in das zu verschweißende Werkstück und/oder die Menge des einzubringenden Zusatzwerkstoffes in das Schmelzbad gesteuert werden kann. Insbesondere kann der Wärmeeintrag bedarfsweise auf ein Minimum reduziert werden, sodass auch Werkstücke mit geringer Wandstärke, beispielsweise Dünnbleche, und/oder aus niedrigschmelzenden Werkstoffen bzw. Metall-Legierungen, beispielsweise Aluminium, geschweißt oder verlötet werden können. Dies ist durch den im Wesentlichen stromlosen Werkstückübergang des Zusatzwerkstoffes möglich, der zum Zeitpunkt der Umpolung des Stromes erfolgt. Ein weiterer Vorteil liegt darin, dass das Umpolen des Stromflusses mit der Bewegung des Schweißdrahtes koordiniert ist. Der Schweißstrom wird während des Kurzschlusses, also beim Kontakt des Schweißdrahtes mit dem Werkstück, umgepolt, wodurch keine zusätzliche Hilfsspannungsquelle zum erneuten Zünden des Lichtbogens benötigt wird, wie dies bei einem Umpolvorgang während einer Lichtbogenbrennphase notwendig wäre. Dies ist insofern möglich, da im Kurzschluss keine zu ionisierende Schutzgassäule, d.h. kein Lichtbogen, vorhanden ist, wobei der Lichtbogen bei Abheben des Schweißdrahtes durch den auf eine definierte Höhe eingestellten bzw. begrenzten Schweißstrom wiederum durch die spezielle Wellenform des Schweißstroms bzw. der Schweißspannung gezündet wird. Durch den Wegfall einer Hilfsspannungsquelle wird ein kostengünstiger und einfacher Aubau des Schweißgerätes ermöglicht.

Durch die Maßnahme nach Anspruch 2 wird eine sichere Tropfenbildung durch Anschmelzen des Schweißdrahts erreicht. Weiters kann das Abschmelzvolumen des Zusatzwerkstoffes - also die Tropfengröße - in vorteilhafter Weise bei Bedarf über die in der Lichtbogenphase angelegte Stromstärke bestimmt werden.

Von Vorteil ist auch die Maßnahme nach Anspruch 3, da dadurch die Menge an Zusatzwerkstoff für die Tropfenbildung ebenfalls beeinflusst werden kann.Beispielsweise wird bei größerem Strom während der Kurzschlussphase in der darauffolgenden Lichtbogenbrennphase ein größerer schmelzflüssiger Tropfen bei gleichem Lichtbogenstrom gebildet, wodurch eine größere Menge an Zusatzwerkstoff bei der darauffolgenden Kurzschlussphase in das Schmelzbad eingebracht werden kann. Dieser Effekt tritt besonders stark bei Zusatzwerkstoffen mit hohem spezifischem Widerstand auf.

Durch die Maßnahme nach Anspruch 4 wird eine zuverlässige Tropfenablöse durch direkte Berührung des Werkstücks bei gleichzeitig geringem bzw. keinem anliegenden Schweißstrom möglich und somit die Spritzerbildung vermieden.

Von Vorteil sind auch die Maßnahmen nach den Ansprüchen 5 und 6, da dadurch der Wärmeeintrag und/oder die Menge an eingebrachten Zusatzwerkstoff in vielfältiger Art und Weise verändert bzw. gesteuert werden kann, wodurch der Schweißprozess bei unterschiedlichsten Schweißverbindungen und für unterschiedlichste Materialkombinationen und Materialdicken verwendet werden kann.

Vorteilhaft ist eine Vorgehensweise gemäß den Merkmalen des Anspruchs 7, da eine periodisch wiederkehrende Wellenform des Schweißstroms wenig steuerungstechnischen Aufwand verursacht und der Schweißprozess in vielen Fällen eine Schweißverbindung mit kontinuierlich gleich bleibender Qualität herstellbar ist.

Die Maßnahme nach Anspruch 8 ist von Vorteil, da durch eine unregelmäßige Umpolung des Schweißstroms die Regelung des Schweißprozesses zusätzlich flexibilisierbar ist und die Anpassungsfähigkeit des Schweißprozesses bei zufällig bzw. nur zeitweise auftretenden Störgrößen bzw. äußeren Einwirkungen im Schweißprozess verbesserbar ist. Beispielsweise kann die Steuervorrichtung je nach Bedarf eine Umpolung des Schweißstromes festlegen, falls die momentan erfassten Sollwerte für den Schweißprozess nicht eingehalten werden.

Durch die in Anspruch 9 wiedergegebene Maßnahme wird in vorteilhafter Weise eine automatisierte und individuelle Parametrisierung eines Schweißprozesses erreicht.

Es sind aber auch die Maßnahmen nach Anspruch 10 von Vorteil, da dadurch eine selbstständige Einstellung der Wellenform des Schweißstromes in Abhängigkeit einer manuell festgelegten Benutzereinstellung vorgenommen wird und somit eine einfache Bedienung eines Schweißgeräts gewährleistet wird bzw. die Bedienerfreundlichkeit wesentlich erhöht wird.

Die Maßnahmen nach Anspruch 11 sind vorteilhaft, da dadurch auch eine externe Steuerung der Umpolung des Schweißstroms möglich ist.

Vorteilhaft sind aber auch die Maßnahmen nach Anspruch 12, da dadurch für die unterschiedlichen Polaritäten unterschiedliche Vorgabewerte für die Geschwindigkeit des Drahtvorschubes und den von dieser bestimmten Prozessparametern, wie beispielsweise der Abschmelzrate des Zusatzwerkstoffes, eingestellt bzw. von der Steuervorrichtung festgelegt werden können, wodurch eine wesentliche Verbesserung der Prozessstabilität erzielt wird und der Schweißprozess variabler durchgeführt werden kann.

Es sind aber auch die Maßnahmen nach den Ansprüchen 13 und 14 von Vorteil, da dadurch auch in der Lichtbogenphase eine Umschaltung der Polarität des Stromflusses möglich ist, wodurch eine noch bessere Anpassung der Parameter an die Schweißaufgabe erfolgen kann. Der Schweißprozess kann somit noch genauer für unterschiedliche Anwendungsfälle optimiert werden.

Die Maßnahmen nach Anspruch 15 und 16 sind vorteilhaft, da dadurch eine verbesserte Spaltüberbrückbarkeit und/oder ein verbesserter Einbrand erzielt wird, wodurch insbesondere Toleranzen in den zu verschweißenden Werkstücken ausgeglichen werden können.

Gelöst wird die erfindungsgemäße Aufgabe auch durch ein oben genanntes Schweißgerät, wobei während zumindest einiger Kurzschlussphases des Schweißprozesses die Polarität des Schweißstromes I und/oder der Scheißspannung U auf einen definierten Wert eingestellt wird, sodass ein Durchschmelzen des Schweißdrahtes bzw. einer Kurzschlussbrücke unterbunden, jedoch eine sichere Wiederzündung des Lichtbogens beim Abheben des Schweißdrahts vom Werkstück ermöglicht wird, indem am Ende der Kurzschlussphase bzw. am Beginn der Lichtbogenphase der Lichtbogen lediglich durch den Schweißstrom I und/oder die Schweißspannung U Hilfsspannungsquellen-los wieder gezündet wird. Von Vorteil ist hierbei, dass durch das wie beschrieben ausgebildete Steuerungsmittel die Einbringung von Wärmeenergie bzw. Zusatzwerkstoff durch Bestimmung der Polarität des Schweißstromes abhängig von der Zeit sehr genau und sehr individuell vom vorliegenden Schweißfall abhängig einstellbar ist. Weitere Vorteile zu dem einstellungsabhängigen Wechsel der Polarität des Schweißstromes sind der vor- und nachstehenden Beschreibung zu entnehmen.

In den Ansprüchen 18 bis 20 sind vorteilhafte Ausgestaltungen eines Schweißgeräts beschrieben, mit dem ein Schweißprozess insgesamt verbessert werden kann und der Aufbau des Schweißgeräts einfach und wartungsfreundlich, beispielsweise durch die Durchführbarkeit von Softwareupdates, gestaltbar ist.

Die vorliegende Erfindung wird anhand der beigefügten, schematischen Zeichnungen näher erläutert. Darin zeigen:
Fig. 1 eine schematische Darstellung einer Schweißmaschine bzw. eines Schweißgerätes;
Fig. 2 die Zeitverläufe der Schweißspannung, des Schweißstromes und ein Bewegungsdiagramm für den Schweißdraht während eines Beispiels eines erfindungsgemäßen Schweißprozesses;
Fig. 3 den Zeitverlauf des Schweißstromes und das Bewegungsdiagramm für den Schweißdraht während eines zweiten Beispiels eines erfindungsgemäßen Schweißprozesses;
Fig. 4 den Zeitverlauf des Schweißstromes und das Bewegungsdiagramm für den Schweißdraht während eines dritten Beispiels eines erfindungsgemäßen Schweißprozesses;
Fig. 5 den Zeitverlauf des Schweißstromes und das Bewegungsdiagramm für den Schweißdraht während eines vierten Beispiels eines erfindungsgemäßen Schweißprozesses;
Fig. 6 den Zeitverlauf des Schweißstromes, das Bewegungsdiagramm für den Schweißdraht und den schematisierten Zeitverlauf eines Steuersignals für die Vorschubgeschwindigkeit des Schweißdrahtes anhand eines fünften Beispiels eines erfindungsgemäßen Schweißprozesses.

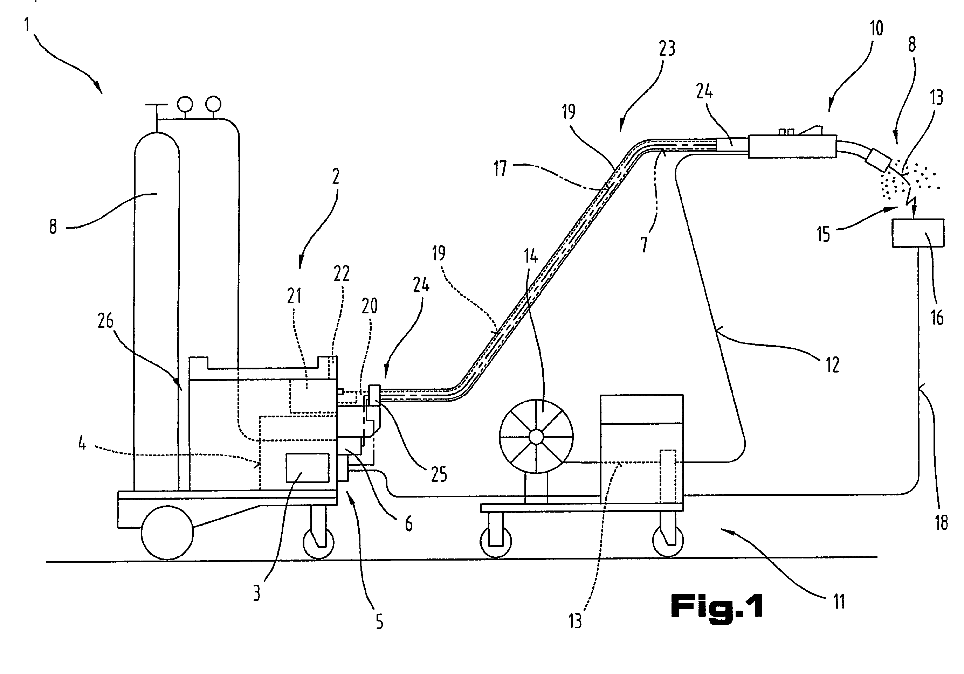

In Fig. 1 ist ein Schweißgerät 1 bzw. eine Schweißanlage für verschiedenste Prozesse bzw. Verfahren mit abschmelzender Schweißelektrode, insbesondere einem Schweißdraht bzw. Zusatzwerkstoff, wie z.B. MIG/MAG-Schweißen oder Elektroden-Schweißverfahren, Doppeldraht/Tandem-Schweißverfahren oder Lötverfahren usw., gezeigt.

Das Schweißgerät 1 umfasst eine Stromquelle 2 mit einem Leistungsteil 3, einer Steuervorrichtung 4 und einem dem Leistungsteil 3 bzw. der Steuervorrichtung 4 zugeordneten Umschaltglied 5. Das Umschaltglied 5 bzw. die Steuervorrichtung 4 ist mit einem Steuerventil 6 verbunden, welches in einer Versorgungsleitung 7 für ein Gas 8, insbesondere ein Schutzgas, wie beispielsweise CO₂, Helium oder Argon und dgl., zwischen einem Gasspeicher 9 und einem Schweißbrenner 10 bzw. einem Brenner angeordnet ist.

Zudem kann über die Steuervorrichtung 4 noch ein Drahtvorschubgerät 11, welches insbesondere für das MIG/MAG-Schweißen üblich ist, angesteuert werden, wobei über eine Versorgungsleitung 12 ein Zusatzwerkstoff bzw. ein Schweißdraht 13 von einer Vorratstrommel 14 bzw. einer Drahtrolle in den Bereich des Schweißbrenners 10 zugeführt wird. Selbstverständlich ist es möglich, dass das Drahtvorschubgerät 11, wie es aus dem Stand der Technik bekannt ist, im Schweißgerät 1, insbesondere im Grundgehäuse, integriert ist und nicht, wie in Fig. 1 dargestellt, als Zusatzgerät ausgebildet ist.

Es ist auch möglich, dass das Drahtvorschubgerät 11 den Schweißdraht 13 bzw. den Zusatzwerkstoff außerhalb des Schweißbrenners 10 an die Prozessstelle zuführt. Weiters kann das Drahtvorschubgerät 11 unterschiedliche Antriebseinheiten aufweisen, wobei eine Antriebseinheit beispielsweise im Bereich des Schweißdrahtaustritts, insbesondere im Schweißbrenner 10, bzw. der Schweißstelle am Werkstück angeordnet sein kann und eine weitere Antriebseinheit im Bereich der Vorratstrommel 14 angeordnet sein kann. Zwischen den Antriebseinheiten kann ein Drahtpuffer vorgesehen sein, welcher gegebenenfalls einen variablen Längenabschnitt des Schweißdrahts 13 aufnimmt, insbesondere bei einer durchzuführenden Rückförderung des Schweißdrahtes 13.

Der Schweißstrom zum Aufbauen eines Lichtbogens 15, insbesondere eines Arbeitslichtbogens, zwischen der Elektrode und einem Werkstück 16 wird über eine Schweißleitung 17 vom Leistungsteil 3 der Stromquelle 2 dem Brenner 10, insbesondere der Elektrode, zugeführt, wobei das zu verschweißende Werkstück 16, welches insbesondere aus mehreren Teilen gebildet ist, über eine weitere Schweißleitung 18 ebenfalls mit dem Schweißgerät 1, insbesondere mit der Stromquelle 2, verbunden ist und somit über den Lichtbogen 15 für einen Schweißprozess ein Stromkreis aufgebaut werden kann.

Zum Kühlen des Schweißbrenners 10 kann über einen Kühlkreislauf 19 der Schweißbrenner 10 unter Zwischenschaltung eines Strömungswächters 20 mit einem Flüssigkeitsbehälter, insbesondere einem Wasserbehälter 21, verbunden werden, wodurch bei der Inbetriebnahme des Schweißbrenners 10 der Kühlkreislauf 19, insbesondere eine für die im Wasserbehälter 21 angeordnete Flüssigkeit verwendete Flüssigkeitspumpe, gestartet wird und somit eine Kühlung des Schweißbrenners 10 bewirkt werden kann.

Das Schweißgerät 1 kann des Weiteren eine Ein- und/oder Ausgabevorrichtung 22 aufweisen, über welche die unterschiedlichsten Schweißparameter, Betriebsarten oder Schweißprogramme des Schweißgerätes 1 eingestellt bzw. aufgerufen werden können. Dabei werden die über die Ein- und/oder Ausgabevorrichtung 22 eingestellten Schweißparameter, Betriebsarten oder Schweißprogramme an die Steuervorrichtung 4 weitergeleitet und von dieser werden anschließend die einzelnen Komponenten der Schweißanlage bzw. des Schweißgerätes 1 angesteuert bzw. entsprechende Sollwerte für die Regelung oder Steuerung vorgegeben.

Des Weiteren ist in dem dargestellten Ausführungsbeispiel der Schweißbrenner 10 über ein Schlauchpaket 23 mit dem Schweißgerät 1 bzw. der Schweißanlage verbunden. In dem Schlauchpaket 23 sind die einzelnen Leitungen vom Schweißgerät 1 zum Schweißbrenner 10 angeordnet. Das Schlauchpaket 23 wird über eine Kupplungsvorrichtung 24 mit dem Schweißbrenner 10 verbunden, wogegen die einzelnen Leitungen im Schlauchpaket 23 mit den einzelnen Kontakten des Schweißgerätes 1 über Anschlussbuchsen bzw. Steckverbindungen verbunden sind. Damit eine entsprechende Zugentlastung des Schlauchpaketes 23 gewährleistet ist, ist das Schlauchpaket 23 über eine Zugentlastungsvorrichtung 25 mit einem Gehäuse 26, insbesondere mit dem Grundgehäuse des Schweißgerätes 1, verbunden. Selbstverständlich ist es möglich, dass die Kupplungsvorrichtung 24 auch für die Verbindung am Schweißgerät 1 eingesetzt werden kann.

Grundsätzlich ist zu erwähnen, dass für die unterschiedlichen Schweißverfahren bzw. Schweißgeräte 1, wie beispielsweise MIG/MAG-Geräte, nicht alle zuvor benannten Komponenten verwendet bzw. eingesetzt werden müssen. Beispielsweise ist es auch möglich, dass der Schweißbrenner 10 als luftgekühlter Schweißbrenner 10 ausgeführt wird.

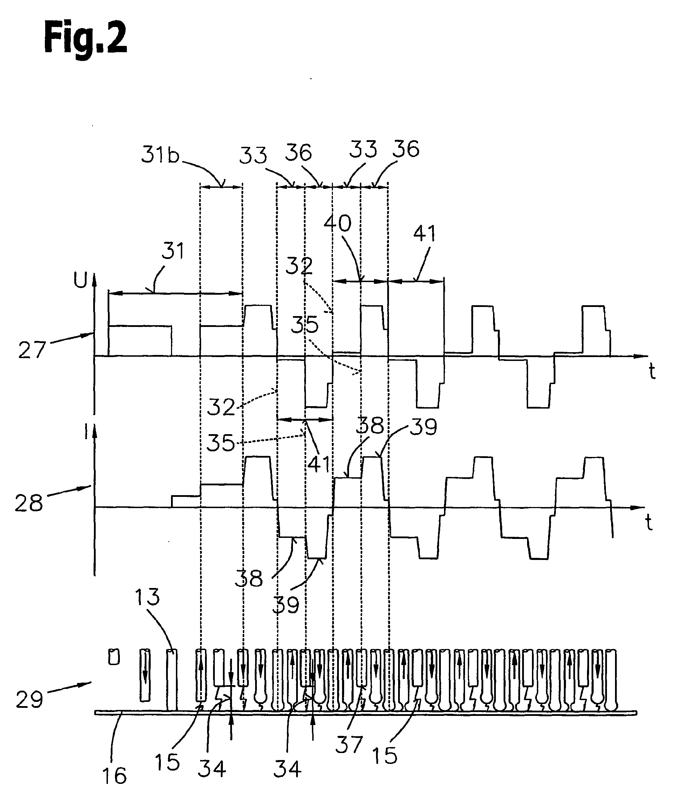

In Fig. 2 ist ein Ausführungsbeispiel eines erfindungsgemäßen Schweißprozesses anhand der Diagramme 27 bis 29 schematisch dargestellt. Diagramm 27 zeigt den Zeitverlauf der Schweißspannung U, Diagramm 28 den Zeitverlauf des Schweißstroms I, und Diagramm 29 die Bewegungen bzw. Stellungen des austrittsseitigen Endes des Schweißdrahtes 13 relativ zum Werkstück 16. Die Verläufe zeigen ein Verfahren zum Steuern und/oder Regeln des Schweißgerätes 1 bzw. der Schweißstromquelle 2, mit einer abschmelzenden Elektrode bzw. dem Schweißdraht 13. Dabei erfolgt die Aufschmelzung des Werkstückes 16 und des Schweißdrahtes 13 über die ionisierte Plasmasäule bzw. den Lichtbogen 15, der zwischen dem Schweißdraht 13 und dem elektrischen Gegenpol am Werkstück 16 aufgebaut wird.

Das Zünden des Lichtbogens 15 kann über ein beliebiges Verfahren erfolgen, beispielsweise in Art des aus dem Stand der Technik bekannten Lift-Arc-Prinzips, bei dem während einer Zündphase 31 eine Leerlaufspannung an den Schweißdraht 13 angelegt wird, anschließend der Schweißdraht 13 bis zur Kontaktierung des Werkstücks 16 nach vorne bewegt wird, worauf der entstehende Kurzschluss während einer Kurzschlussphase durch Umkehr der Förderrichtung des Schweißdrahtes 13 aufgebrochen wird und über die Wegstrecke der Rückförderung des Schweißdrahtes 13 ein Lichtbogen aufgebaut wird, bis eine erneute Umkehr der Drahtförderrichtung erfolgt, so dass der Schweißdraht 13 wiederum in Richtung des Werkstücks 16 bewegt wird. Der Strom I ist in der Zündphase 31 in einer oder mehreren Stufe(n) derart begrenzt, dass ein Schmelzen des Schweißdrahtes 13 nicht erfolgen kann. In einer weiteren, möglichen Ausführungsvariante kann die Erstzündung des Lichtbogens 15 über ein hochfrequentes Spannungssignal, eine so genannte Hochfrequenzzündung, erfolgen.

Nach dem Zünden des Lichtbogens 15 kann vor dem eigentlichen Schweißprozess auch eine erste kurze Prozessphase 31b mit erhöhter Energieeinbringung über eine definierte Zeitdauer und anschließend der durch zyklisch wiederkehrende Schweißprozessphasen aufgebaute Schweißprozess durchgeführt werden. Durch diese kurze Prozessphase 31b mit hoher Energieeinbringung wird eine Stabilisierung des Lichtbogens 15 geschaffen. Des Weiteren wird der Schweißdraht 13 durch den Zündprozess erwärmt und dadurch kann der nachfolgende Schweißprozess mit vorgewärmtem Schweißdraht 13 beginnen, wodurch die Schweißqualität wesentlich verbessert wird.

Nach der Zündphase 31 bzw. der Prozessphase 31b erfolgt der eigentliche Schweißprozess, wobei erfindungsgemäß ein Kalt-Metall-Transfer (CMT)-Schweißprozess durchgeführt wird. Beim CMT-Prozess wird der Schweißdraht 13 bis zur Berührung mit dem Werkstück 16 in Richtung Werkstück 16 gefördert, worauf nach Bildung eines Kurzschlusses zum Zeitpunkt 32 die Kurzschlussphase 33 eintritt, in der die Drahtförderrichtung umgekehrt wird. Der Schweißdraht 13 wird in der Kurzschlussphase 33 bis zum Aufbrechen des Kurzschlusses, d.h. der Bildung des Lichtbogens 15, und/oder einem definierten Abstand 34 und/oder eine definierte Zeitdauer vom Werkstück 16 wegbewegt, worauf zum Zeitpunkt 35 die hierin als Lichtbogenphase 36 bezeichnete Prozessphase eintritt. In der Lichtbogenphase 36 erfolgt ein Anschmelzen des Schweißdrahts 13, so dass am Schweißdrahtende eine Tropfenbildung erfolgt. Die Bewegungsrichtung des Schweißdrahts 13 wird an einem oberen Totpunkt 37 erneut umgekehrt, worauf der Schweißdraht 13 in Richtung des Werkstücks 16 bewegt wird. Der Schweißstrom I und/oder die Schweißspannung U wird in der Lichtbogenphase 36 derart geregelt, dass eine Anschmelzung des Schweißdrahtes 13, also eine Tropfenbildung, erfolgt, jedoch keine Abschmelzung des Schweißdrahtes 13.

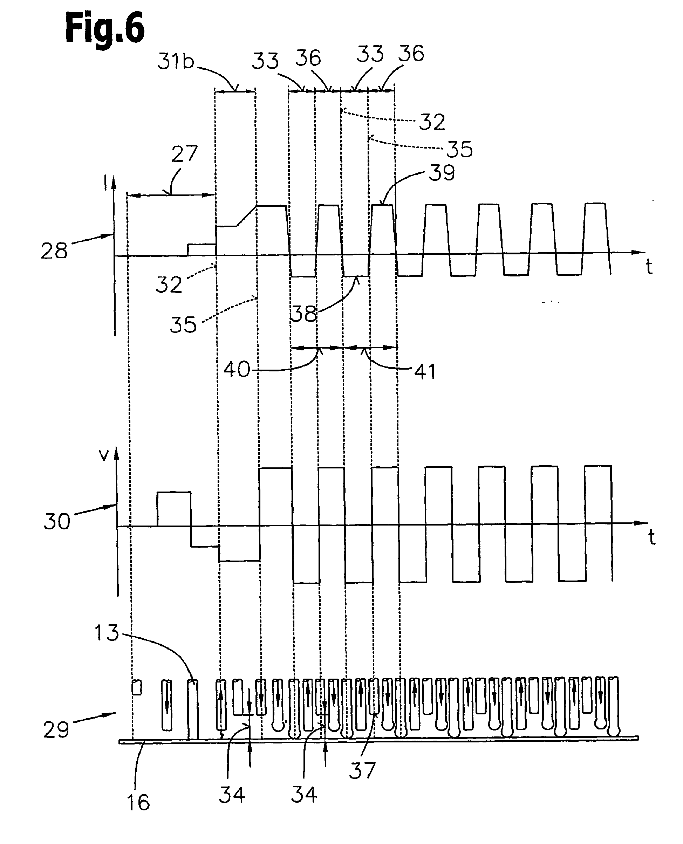

Der Schweißdraht 13 führt während des Schweißprozesses eine oszillierende Bewegung durch. Das Drahtvorschubgerät 11 wird im Wesentlichen so getaktet, dass ein negatives Signal bzw. eine Rückwärtsförderung des Schweißdrahtes 13 in der Kurzschlussphase 33 erfolgt, in der ein Lichtbogen 15 aufgebaut wird, und ein positives Signal bzw. eine Vorwärtsförderung des Schweißdrahtes 13 in Richtung des Werkstücks 16 in der Lichtbogenphase 36 erfolgt, in der das Erhitzen bzw. Anschmelzen des Schweißdrahtes 13 zur Tropfenbildung erfolgt (siehe Diagramm 30 in Fig. 6). Die Taktung der Bewegungsrichtung des Schweißdrahtes 13 muss jedoch nicht unbedingt mit dem Auftreten der Lichtbogenphase 36 bzw. der Kurzschlussphase 33 korrelieren, da die Lichtbogenphase 36 durch eine gezielte Energieeinbringung über die Regelung des Stromniveaus im Schweißkreis beispielsweise bereits während der Rückwärtsbewegung des Schweißdrahtes 13 erfolgen kann. D.h. es kann auch bei bereits vorhandenem Lichtbogen 15 der Schweißdraht 13 weiterhin bis zu einem definierten Zeitpunkt bzw. Abstand vom Werkstück 16 wegbewegt werden. Beispielsweise erfolgt die Ansteuerung des Drahtvorschubgeräts 11 mit einer Oszillationsfrequenz des Schweißdrahtes 13 von 30 bis 100 Hz, insbesondere ca. 50 bis 70 Hz.

Nach Erreichen des Totpunktes 37 erfolgt eine Vorwärtsbewegung des Schweißdrahtes 13 bis zur Berührung mit dem Werkstück 16, insbesondere einem Schmelzbad. Durch die Oberflächenspannung des Tropfens am Schweißdraht 13 bzw. weiterer bekannter, am flüssigen Tropfen wirkender physikalischer Effekte wird dieser vom Schweißdraht 13 gelöst und durch das Werkstück 16 gebunden, wobei dies durch die fehlende Fallbewegung des Tropfens frei von Schweißspritzern oder ähnlichen Phänomenen erfolgt. Anschließend wird wiederum die Kurzschlussphase 33 eingeleitet, wobei durch die Rückwärtsbewegung des Schweißdrahtes 13 die Tropfenablöse begünstigt wird. Zur Unterstützung der Tropfenablöse kann eine Erhöhung, insbesondere eine impulsartige Erhöhung des Schweißstromes I in der Kurzschlussphase 33 durchgeführt werden. Für die Dauer des CMT-Prozesses wechseln einander die Kurzschluss-phase 33 und die Lichtbogenphase 36 im gezeigten Ausführungsbeispiel periodisch ab.

Auf genauere, verfahrenstechnische Details des CMT-Prozesses wird an dieser Stelle nicht eingegangen, da dieser für Schweißprozesse mit konstanter Polarität am Schweißdraht 13 bzw. dem Werkstück 16 bereits aus dem Stand der Technik bekannt ist.

Erfindungsgemäß ist zur Erweiterung der Eingriffsmöglichkeiten in den Schweißprozess nun vorgesehen, dass in sämtlichen oder einigen der Kurzschlussphasen 33 eine Umschaltung der Polarität des Stromflusses, insbesondere des Stromes I und der Spannung U, erfolgt, wobei eine definierte Amplitude für den Strom I eingestellt wird, sodass ein Durchschmelzen des Schweißdrahtes 13 bzw. einer Kurzschlussbrücke unterbunden wird, jedoch eine Wiederzündung des Lichtbogens 15 beim Abheben des Schweißdrahtes 13 vom Werkstück 16 sicher erfolgt.

Wie aus Fig. 2 ersichtlich, weist der Schweißstrom I eine Wellenform bzw. eine Impulsfolge mit einer periodisch wechselnden Polarität auf, wobei die Polarität während des regulären Schweißprozesses mit jeder Halbperiode 40, 41 des Schweißstromes I wechselt. Die Zeit der Periode 40 des Stroms I mit positiver Polarität und die Zeit der Periode 41 des Stroms I mit negativer Polarität stimmt im Wesentlichen überein.

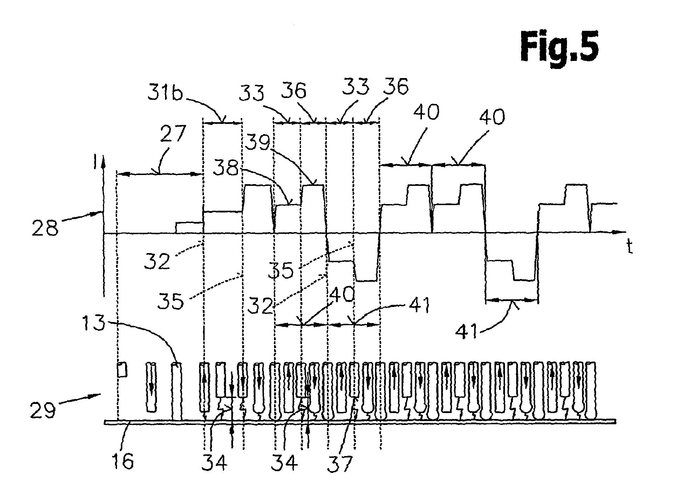

Alternativ dazu kann der Schweißstrom I eine zumindest zeitweise aperiodisch wechselnde Polarität aufweisten. Hierbei sind die Zeitanteile 40, 41 des Stroms I mit positiver und negativer Polarität über einen bestimmten Zeitraum unterschiedlich, wie dies im Zuge der Fig. 5 weiter unten näher beschrieben ist.

Die Spannung U bzw. der Strom I werden mit Überschreiten des Zeitpunkts 32 auf ein erstes Niveau gehoben, welches ein sicheres Wiederzünden des Lichtbogens 15 gewährleistet. Gegebenenfalls kann dieses Niveau als Arbeitsniveau festgelegt werden, das während der gesamten Kurzschlussphase 33 und der Lichtbogenphase 36 konstant gehalten wird. Bevorzugt weist eine positive oder negative Periode bzw. Periodenabschnitt des Schweißsromes I jedoch einen ersten Anteil, den Grundstrom 38, und zumindest einen weiteren Anteil, den Arbeitsstrom 39, auf, wie dies aus dem Diagramm 28 hervorgeht. Im gezeigten Ausführungsbeispiel ist der Grundstrom 38 und der Arbeitsstrom 39 konstant. Der Grundstrom 38 bzw. der Arbeitsstrom 39 kann sich zeitlich auch verändern. Insbesondere kann der Grundstrom 38 im zeitlichen Verlauf ansteigen und/oder der Arbeitsstrom 39 im zeitlichen Verlauf abfallen.

Der Grundstrom 38 ist gegenüber dem Arbeitsstrom 39 bevorzugt verhältnismäßig klein, wobei der Arbeitsstrom 39 beispielsweise um das 1,5 bis 10-fache, insbesondere das 4 bis 8-fache, höher als der Grundstrom 38 sein kann. Der Grundstrom 38 kann beispielsweise 5 A bis 50 A, insbesondere ca. 10 bis 30 A, und der Arbeitsstrom 39 beispielsweise 50 A bis 500 A betragen.

Erfindungsgemäß liegt an der Elektrode bzw. dem Schweißdraht 13 und dem Werkstück 16 zumindest zeitweilig eine zu einer ersten Polarität, die nachfolgend als positiver Anteil des Schweißstroms I bezeichnet wird und in den Figuren als posititive Periode 40 eingetragen ist, wechselnde bzw. gewechselte Polarität an, die nachfolgend als negativer Anteil des Schweißstromes I bezeichnet wird und die in den Figuren als negative Periode 41 des Schweißstroms I eingetragen ist. Dieser negative Anteil des Schweißstroms I lässt eine Vielzahl von Steuerungs- bzw. Regelungsmöglichkeiten für den Schweißprozess zu, indem die positiven und negativen Anteile des Schweißstromes I wechselweise angeglegt werden. Der negative Anteil des Schweißstroms I bildet eine zusätzliche Einflussgröße im Schweißprozess, sodass bei entsprechender Festlegung der Eigenschaften und der Zeitdauer des Anliegens der positiven und negativen Polaritäten des Schweißstroms I am Werkstück 16 und der Elektrode bzw. dem Schweißdraht 13 der Energiehaushalt sehr genau und anwendungsspezifisch bestimmt werden kann. Diese Steuerung der elektrischen Energiezufuhr wird dabei durch die Steuervorrichtung 4 durchgeführt.

Durch den bedarfsweisen Polaritätswechsel des Schweißstroms I wird die Temperatur der Wärmeeinflusszone am Werkstück 16 gegenüber einem Schweißprozess mit konstanter Polarität wesentlich verringert. Dies wird einerseits durch den idealerweise stromlosen Übertritt des Zusatzwerkstoffes zum Zeitpunkt 32 erreicht, wodurch zum Zeitpunkt der Tropfenablöse eine Abkühlung der wärmebeinflussten Teile, insbesondere des Schmelzbades und des Zusatzmaterials, erfolgen kann. Gegenüber den aus dem Stand der Technik bekannten CMT-Prozessen kann die Wärmeeinbringung beim vorliegenden Schweißprozess in vorteilhafter Weise reduziert werden, da in der negativ gepolten Lichtbogenphase 36 eine Verringerung des Schweißstromes I bei gleichbleibendem Abschmelzvolumen durchgeführt wird. Durch Verringerung des Wärmeeintrags in das Werkstück 16 können noch dünnere Wandstärken bzw. Materialien mit niedrigeren Schmelztemperaturen verschweißt werden.

Ist an den Schweißdraht 13 nun der positive Pol des Schweißstroms I angelegt, wird die Elektrode stärker erwärmt, als bei negativer Polung. Dieser bekannte Effekt bewirkt, dass bei positiver Polung des Schweißdrahtes 13 am Schweißdraht 13 ein größeres Materialvolumen angeschmolzen wird, als bei negativer Polung. Umgekehrt wird bei positiver Polung des Werkstücks 16 mehr Wärmeenergie in den Bereich der Schweißstelle am Werkstück 16 eingebracht, wodurch die Wärmeeinflusszone am Werkstück vergrößert wird bzw. der Einbrand im Werkstück 16 tiefer wird, als bei gegenteiliger Polung. Diese Effekte können durch das erfindungsgemäße Verfahren gezielt ausgenutzt werden, indem die Umschaltung der Polarität nach Bedarf oder laut Einstellung der Stromquelle 2 gesteuert wird.

Nach der in Fig. 2 dargestellten Ausführungsvariante folgt auf eine positive Periode 40, welche eine Kurzschlussphase 33 und eine Lichtbogenphase 36 beinhaltet, eine negative Periode 41, die ebenfalls eine Kurzschlussphase 33 und eine Lichtbogenphase 36 beinhaltet, die in dieser Reihenfolge periodisch aufeinander folgen.

In einer vorteilhaften Verfahrensvariante wird der Schweißstrom I in der Lichtbogenphase 36 verändert, insbesondere erhöht, wodurch die Tropfenbildung bzw. das Anschmelzen des Schweißdrahtes 13 erreicht wird. Dabei wird der Schweißstrom I in der Lichtbogenphase 36 bevorzugt vom Grundstrom 38, der in der Kurzschlussphase 33 anliegt, auf den vorstehend erwähnten Arbeitsstrom 39 erhöht. Weiters wird bevorzugt vor der Kurzschlussphase 33 der Schweißstrom I auf einen geringen Wert abgesenkt, wie dies schematisch dargestellt ist, bzw. auf Null reduziert, um ein Minimum an Lichtbogendruck bei geringerwerdendem Abstand zwischen Elektrode bzw. Schweißdraht 13 und Werkstück 16 zu erhalten. Somit wird ein spritzerfreier Übergang von der Lichtbogenphase 36 in die Kurzschlussphase 33 ermöglicht.

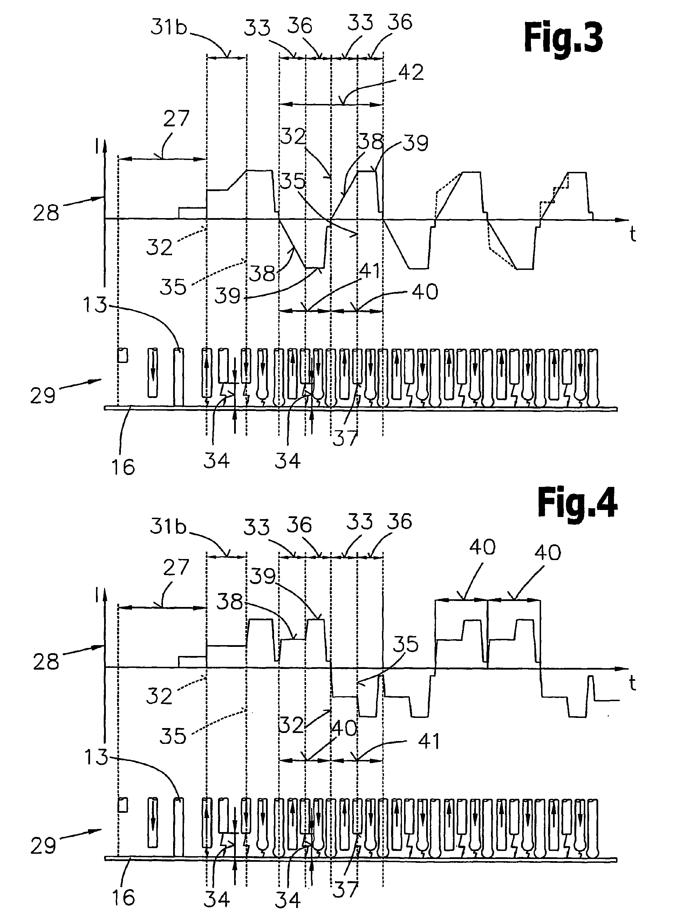

Fig. 3 zeigt eine weitere Verfahrensvariante, bei der der Schweißstrom I in der Kurzschlussphase 33 zeitlich verändert wird. Diagramm 28 zeigt den zeitlichen Verlauf des Schweißstromes I und Diagramm 29 den zeitlichen Verlauf der Bewegungen bzw. Stellungen des Schweißdrahtes 13. Auf die Darstellung des zeitlichen Verlaufs der Schweißspannung U wird in weiterer Folge verzichtet, da diese variable bzw. unterschiedliche Wellenformen aufweisen kann, damit der in Diagramm 29 dargestellte Kurvenverlauf des Schweißstroms I sichergestellt ist.

Der in der Kurschlussphase 33 anliegende Grundstrom 38 wird ab dem Zeitpunkt 32 beispielsweise stetig erhöht, wodurch der Schweißdraht 13 in der Kurzschlussphase 33 bereits erheblich vorgewärmt wird oder bedarfsweise angeschmolzen wird. Die Abschmelzrate des Zusatzwerkstoffs kann somit erhöht werden. Beispielsweise kann somit ein breiterer Spalt zwischen den zu verbindenden Teilen des Werkstücks 16 mit Zusatzwerkstoff gefüllt und überbrückt werden, was insbesondere zum Verbinden zweier Teile über Stumpfnähte mit großer bzw. unregelmäßiger Spaltbreite vorteilhaft ist.

Der Anstieg des Schweißstroms I in der Kurzschlussphase 33 kann stetig (durchgezogene Linien), beispielsweise nach einer Rampenfunktion, oder stufenweise (strichlierte Linien) erfolgen.

Auch die Vorschubgeschwindigkeit des Schweißdrahtes 13 kann während unterschiedlicher Prozessphasen auf einen vordefinierten Konstantwert festgelegt oder variabel nachregelbar sein. Die Vorschubgeschwindigkeit kann von unterschiedlichen Prozessparametern abhängig sein, wobei die Regelung des Drahtvorschubgeräts 11 vorzugsweise automatisch durch die Steuervorrichtung 4 erfolgt. Beispielsweise ist die Drahtvorschubgeschwindigkeit umso höher, je höher der Schweißstrom I in der Kurzschlussphase 33 bzw. der Lichtbogenphase 36 ist. Bei Veränderung des Schweißstromes I wird die Drahtvorschubgeschwindigkeit bevorzugt entsprechend angepasst, damit die an der Stromquelle 2 bzw. Steuervorrichtung 4 vorgegebenen Sollwerte eingehalten werden können.

In Fig. 4 ist eine weitere Verfahrenvariante veranschaulicht. Hierbei erfolgt die Umschaltung der Polarität des Schweißstromes I nur in einigen Kurzschlussphasen 33 eines Schweißprozesses, bevorzugt nach einer vorgegebenen Anzahl von Kurzschlussphasen 33 und Lichtbogenphasen 36 mit gleicher Polarität des Schweißstroms I. Eine Kurzschlussphase 33 und eine Lichtbogenphase 36 bilden eine Periode 40. Wie dargestellt, bleibt der Schweißstrom I über zwei aufeinanderfolgende Perioden 40 gleich gepolt, worauf ein Wechsel der Polarität des Schweißstromes I folgt. Anschließend erfolgt eine erneute Umschaltung der Polarität des Schweißstromes I wiederum nach einer vordefinierten Anzahl von Perioden 40. Im Ausführungsbeispiel stimmt die Anzahl der positiven Perioden 40 und der negativen Perioden 41 während des Schweißprozesses im Verhältnis im Wesentlichen überein.

In Fig. 5 ist eine weitere Verfahrensvariante gezeigt, bei der die Umschaltung der Polarität des Schweißstromes I nach einer durch die Steuervorrichtung 4 definierten Anzahl von Perioden 40 erfolgt. Dabei stimmen die Anzahl der positiven Perioden 40 nicht mit der Anzahl der negativen Perioden 41 überein, es überwiegen während eines Schweißprozesses im Verhältnis beispielsweise die positiven Perioden 40. Die negative Periode 41 greift insofern in den Schweißprozess ein, als durch den negativen Pol am Schweißdraht 13 oder dem Werkstück 16 weniger Wärme eingebracht wird und eine Senkung der thermischen Energie am beeinflussten Element erfolgt. Der Wärmehaushalt kann durch die negative Periode 41 entscheidend beeinflusst werden. Die Wellenform der negativen Periode 41 kann dabei der invertierten, positiven Periode 40 entsprechen, oder es ist der Schweißstrom I während der negativen Periode 41 in der Kurvenform und/oder betragsmäßig verändert, insbesondere geringer oder höher, als während der positiven Periode 40. Beispielsweise kann der Schweißstrom I bei gleichbleibender Abschmelzrate des Schweißdrahtes 13 geringer gewählt werden, wodurch aufgrund des geringeren Schweißstromes I weniger Wärmeenergie in das Werkstück 16 eingebracht wird.

Es ist möglich, dass der Polaritätswechsel des Schweißstromes I unregelmäßig bzw. je nach Bedarf von der Steuervorrichtung 4 festgelegt wird. Tritt beispielsweise ein zu hohes Abschmelzvolumen des Schweißdrahtes 13 auf bzw. ist die Wärmeeinbringung in das Werkstück 16 zu hoch, kann dies von der Steuervorrichtung 4 über entsprechende Sensoren in einem Regelkreis erkannt werden, worauf eine Umschaltung der Polarität des Schweißstromes I zur Senkung der Temperatur vorgenommen wird.

Eine weitere, nicht näher dargestellte Verfahrensvariante besteht darin, dass eine Periode 40; 41 des Schweißstromes I gegenüber der anders gepolten Periode 41; 40 eine kürzere oder längere Periodendauer aufweist. Zum Beispiel ist die Periodendauer der positiven Periode 40 von kürzerer Dauer, als die Periodendauer der negativen Periode 41. Somit wird die während der positiven Periode 40 erzeugte Wärmeenergie an die während der negativen Periode 41 erzeugten Wärmeenergie angeglichen, wodurch ein konstantes Abschmelzvolumen am Schweißdraht 13 bei wechselnder Polarität des Schweißstroms I erreicht werden kann. Selbstverständlich besteht auch die Möglichkeit, dass der Schweißstrom I während der negativen Periode 41 gegenüber dem Strom I während der positiven Periode 40 verändert, insbesondere erhöht wird, sodass die Schwankungen der Wärmeeinbringung bei unterschiedlichen Polaritäten des Schweißstroms I ausgeglichen werden können.

In Fig. 6 ist eine weitere Verfahrensvariante gezeigt. Hierbei wird während einer Periode 40, 41 die Polarität des Schweißstroms I zumindest zweimal gewechselt. Beispielsweise erfolgt die erste Umschaltung der Polarität des Schweißstroms I in der Kurzschlussphase 33 und die zweite Umschaltung der Polarität des Schweißstroms I in der Lichtbogenphase 36. Während des Rückhubes des Schweißdrahtes 13 in der Kurzschlussphase 33 liegt beispielsweise die negative Polarität des Schweißstroms I am Schweißdraht 13 an, wobei zum Zeitpunkt 35 die Polarität des Schweißstroms I wechselt und in der Lichtbogenphase 36 die positive Polarität des Schweißstroms I an den Schweißdraht angelegt wird.

Eine derartige Vorgehensweise ist vorteilhaft, da in der Kurzschlussphase 33 eine geringere Wärmeenergie am Schweißdraht 13 entsteht und in der Lichtbogenphase 36 durch positive Polung des Schweißdrahtes 13 eine hohe Abschmelzrate des Zusatzwerkstoffs und durch die negative Polung des Werkstücks 16 eine geringe Wärmeeinbringung in dieses erzielt werden kann. Bedarfsweise kann die Polung des Schweißdrahtes 13 bzw. des Werkstücks 16 selbstverständlich umgekehrt sein, um spezielle Schweißprozesse gegebenenfalls positiv zu beeinflussen.

Im Allgemeinen sei zu den in den Fig. 2 bis 6 beschriebenen Ausführungsvarianten angemerkt, dass die zeitlich gesteuerte Umschaltung der Polarität des Schweißstroms I innerhalb einer Periode in Abhängigkeit von Parametern, wie beispielsweise dem Parameter der Wärmeeinbringung, dem Parameter des Schweißstromes I, dem Parameter der Schweißspannung U, einem Parameter der Materialeinbringung bzw. Materialfüllung, einem Parameter des Schweißspaltes im Werkstück 16, usw., bestimmt werden kann. Hierzu können der Steuervorrichtung 4 aus dem Stand der Technik bekannte Erfassungselemente bzw. Sensoren, Einstellorgane, Bedieneinrichtungen bzw. Fernregler, Datenspeicher, Steuerungsmittel, wie z.B. eine Software bzw. Programmlogik, usw. zugeordnet sein, damit die Steuervorrichtung 4 eine entsprechende Erfassung und Festlegung von Sollwerten bzw. Stellgrößen im Regelungsprozess vornehmen kann.

Beispielsweise wird ein Spalt der zu verschweißenden Werkstücke 16 ermittelt und entsprechend der Spaltbreite und/oder Spalthöhe eine Regelung der Größe und/oder Polarität des Schweißstromes I durchgeführt. Weiters kann eine Tiefe des Einbrandes, insbesondre die sogenannte Schweißwurzel, ermittelt werden und entsprechend die Regelung der Polaritätswechsel des Schweißstromes I erfolgen.

Es ist auch möglich, dass durch Erfassen der Temperatur des Werkstückes 16 und durch Vorgabe einer definierten Wärmeeinbringung am Schweißgerät 1 eine automatische Regelung der Polaritätswechsel und/oder der Anzahl bzw. Dauer einzelner Perioden 40, 41 des Schweißstroms I zur Regelung des Wärmehaushalts erfolgt. Dabei wird an die Steuervorrichtung 4 des Schweißgerätes 1 die erfasste Temperatur des Werkstückes 16 weitergeleitet, worauf von dieser festgelegt wird, ob die Polarität bzw. die Eigenschaften des Schweißstroms I verändert werden.

Das Schweißgerät 1 besteht aus einer Schweißstromquelle bzw. Stromquelle 2, einer Steuervorrichtung 4 und einem Schweißbrenner 10. Über die Ein- und/oder Ausgabevorrichtung 22 sind am Schweißgerät 1 oder über einen Fernregler die unterschiedlichen Schweißparameter einstellbar. An dieser Ein- und/oder Ausgabevorrichtung 22 des Schweißgerätes und/oder einem Fernregler kann zumindest ein Parameter für den Wärmehaushalt oder die Wärmeeinbringung in das zu bearbeitende Werkstück ausgewählt werden und/oder ein Einstellorgan zur Einstellung des Wärmehaushalts bzw. der Wärmeeinbringung in das zu bearbeitende Werkstück angeordnet sein.

Der Ein- und/oder Ausgabevorrichtung 22 oder dem Fernregler ist ein Steuerungsmittel zugeordnet, das zur von der Einstellung des Wärmehaushalts bzw. der Wärmeeinbringung abhängigen Festlegung der Zeitpunkte eines Wechsels der Polarität des Schweißstromes I ausgebildet ist. Durch das Steuerungsmittel wird die Kurvenform des Schweißstroms in Abhängigkeit der Parameter für den Wärmehaushalt bzw. der Wärmeeinbringung bestimmt.

Die eingestellten Parameter werden an die Steuervorrichtung 4 des Schweißgerätes 1 weitergeleitet, worauf von dieser ein entsprechender Schweißprozess gesteuert bzw. geregelt wird. In der Ein- und/oder Ausgabevorrichtung 22 können die unterschiedlichsten Parameter für den Schweißprozess, wie beispielsweise der Schweißstrom I und/oder die Schweißspannung U und/oder die Drahtfördergeschwindigkeit V und/oder ein Schweißparameter für die Wärmeeinbringung und/oder das Material der zu verschweißenden Werkstücke 16 und/oder das Material des Schweißdrahtes 13 und/oder das verwendete Schweißgas eingestellt werden.

Auf einer Anzeige können die vorgenommenen Einstellungen abgelesen werden. Die Einstellung erfolgt bei der dargestellten Ein- und/oder Ausgabevorrichtung 22 über Auswahl- oder Einstellorgane, welche durch Tasten, Drehschalter oder Potentiometer gebildet sein können. Beispielsweise kann mit ersten Tasten die Dicke für den Schweißdraht 13 eingestellt und an einer Anzeige die entsprechende Einstellung angezeigt werden. Mit einer zweiten Anordnung von Tasten kann beispielsweise das Material des Schweißdrahtes 13 ausgewählt werden, und über eine weitere Anzeige die eingestellte Materialkombination angezeigt werden. Über eine dritte Tastenkombination wird die Art des Schweißprozesses durch zyklische oder azyklische Änderung der Polarität des Schweißstroms I eingestellt und auf einer dritten Anzeige dargestellt.

Beispielsweise kann die Frequenz der wechselnden Drahtbewegung bzw. die Nulldurchgänge des Schweißstroms I benutzerdefiniert direkt, oder über einen zu diesen Parametern proportionalen Parameter indirekt, eingestellt werden.

Eine Einstellung des Wärmehaushalts bzw. der Wärmeeinbringung in das Werkstück 16 kann aber auch derart erfolgen, dass der Benutzer einen üblichen Schweißprozess einstellt, und durch zusätzliches Einstellen eines weiteren Parameters, wie der an einer Anzeige dargestellten und über Tasten auswählbaren Wärmeeinbringung, den Wärmehaushalt festlegt. Hierbei kann der Benutzer durch Auswahl an der Anzeige in einfacher Form festlegen, ob beispielsweise eine niedrige, mittlere oder hohe Wärmeeinbringung stattfinden soll, so dass von der Steuervorrichtung 4 eine entsprechende Steuerung bzw. Regelung vorgenommen wird. Dabei sind zu den einzelnen Auswahlmöglichkeiten entsprechende Daten bzw. Berechnungsmodelle in einem Speicher hinterlegt, so dass eine automatische Festlegung möglich ist.

Beispielsweise können in einem im Schweißgerät 1 integrierten Speicher Daten, beispielsweise AC-Kurvenformen, Stromwerte, Frequenzen, oder dgl. des Schweißstroms I oder Drahtbewegungswege bzw. Oszillationsfrequenzen des Schweißdrahtes 13, für den jeweiligen Schweißprozess hinterlegt sein, nach welchen Daten die Steuervorrichtung 4 das Schweißverfahren steuert. Weiters kann ein mit der Ein- und/oder Ausgabeeinrichtung 22 bzw. dem Fernregler wirkungsgekoppeltes Steuerungsmittel in Form einer Software in einem bevorzugt wiederbeschreibbaren Speicher hinterlegt sein, das insbesondere die Polaritätswechsel und Amplituden des Schweißstromes I bestimmt.

Somit sind vom Benutzer nur wenig Einstellungen vor dem Schweißprozess vorzunehmen, worauf die Steuervorrichtung 4 den Schweißprozess dann selbstständig regelt. Speziell wird dabei der Wärmehaushalt bzw. die Wärmeeinbringung in das Werkstück 16 durch die Materialwahl des Schweißdrahtes 13 und der zu verschweißenden Werkstücke 16 festgelegt. Dabei können für die unterschiedlichsten Materialien für den Schweißdraht 13 und die Werkstücke 16 entsprechende Werte im Speicher hinterlegt sein, so dass von der Steuervorrichtung 4 je nach Materialwahl das Verhältnis der abwechselnden Phasen des Schweißprozesses festlegt wird. Beispielsweise wird für einen Schweißprozess für Aluminium eine geringere Wärmeeinbringung in das Werkstück 16 benötigt, als dies für einen Stahl-Schweißprozess notwendig ist. Somit sind für Aluminium andere Werte hinterlegt als für Stahl, sodass eine niedrigere Energiemenge in das Werkstück 16 eingebracht wird.

Natürlich kann die Auslösung zur Änderung der Polarität des Schweißstromes I auch durch Angabe der Anzahl der Pulse bzw. Perioden 40, 41 oder durch Vorgabe oder Definition einer Zeitdauer oder durch ein Triggersignal durchgeführt werden.

Selbstverständlich ist es möglich, dass die einzelnen zuvor beschriebenen Einstellmöglichkeiten untereinander kombiniert werden bzw. mehrere Einstellmöglichkeiten am Schweißgerät 1 vorgesehen sind.

## Patentansprüche

1. Verfahren zum Steuern und/oder Regeln eines Schweißgerätes (1) bzw. einer Schweißstromquelle (2), mit einem Schweißdraht (13), wobei nach dem Zünden eines Lichtbogens (15) ein Kalt-Metall-Transfer (Cold Metal Transfer CMT)-Schweißprozess durchgeführt wird, bei dem der Schweißdraht (13) bis zur Berührung mit dem Werkstück (16) in Richtung des Werkstücks (16) gefördert wird, anschließend nach Bildung eines Kurzschlusses, während einer Kurzschlussphase (33), die Drahtförderrichtung umgekehrt wird und der Schweißdraht (13) bis zum Aufbrechen des Kurzschlusses vom Werkstück (16) wegbewegt wird, wobei der Schweißstrom I und/oder die Schweißspannung U derart geregelt wird, dass während einer Lichtbogenphase (36) eine Anschmelzung des Schweißdrahtes (13), also eine Tropfenbildung, erfolgt, **dadurch gekennzeichnet, dass** während zumindest einiger Kurzschlussphasen (33) die Polarität des Schweißstroms I und/oder Schweißspannung U, umgeschaltet wird, wobei die Amplitude des Schweißstroms I und/oder der Schweißspannung U auf einen definierten Wert eingestellt wird, sodass ein Durchschmelzen des Schweißdrahtes (13) bzw. einer Kurzschlussbrücke unterbunden , jedoch eine sichere Wiederzündung des Lichtbogens (15) beim Abheben des Schweißdrahtes (13) vom Werkstück (16) ermöglicht wird, indem am Ende der Kurzschlussphase (33) bzw. am Beginn der Lichtbogenphase (36) der Lichtbogen (15) lediglich durch den Schweißstrom I und/oder die Schweißspannung U hilfsspannungsquellenlos wiedergezündet wird.

2. Verfahren nach Anspruch 1, **dadurch gekennzeichnet, dass** während der Lichtbogenphase (36) der Schweißstrom I verändert, insbesondere erhöht wird und dadurch eine Tropfenbildung bzw. ein Anschmelzen des Endes des Schweißdrahtes (13) erfolgt.

3. Verfahren nach Anspruch 1 oder 2, **dadurch gekennzeichnet, dass** während der Kurzschlussphase (33) der Schweißstrom I verändert wird, wobei bei einer Erhöhung des Schweißstromes I der durch den Schweißdraht (13) gebildete Zusatzwerkstoff in das Schmelzbad des Werkstücks (16) und bei einer Verringerung des Schweißstromes I weniger Zusatzwerkstoff in das Schmelzbad des-Werkstücks (16) eingebracht wird.

4. Verfahren nach einem der Ansprüche 1 bis 3, **dadurch gekennzeichnet, dass** nach der Bildung eines Kurzschlusses die Drahtförderrichtung umgekehrt wird und der Schweißdraht (13) bis zu einem frei wählbaren oder vordefinierten Abstand (34) vom Werkstück (16) wegbewegt wird.

5. Verfahren nach einem der Ansprüche 1 bis 4, **dadurch gekennzeichnet, dass** die Polarität des Schweißstromes I und/oder der Schweißspannung U nach jeder durch jeweils eine Kurzschlussphase (33) und eine Lichtbogenphase (36) gebildete Periode (40, 41) umgeschaltet wird.

6. Verfahren nach einem der Ansprüche 1 bis 4, **dadurch gekennzeichnet, dass** die Polarität des Schweißstromes I und/oder der Schweißspannung U nach mehreren durch jeweils eine Kurzschlussphase (33) und eine Lichtbogenphase (36) gebildete Perioden (40, 41) umgeschaltet wird.

7. Verfahren nach Anspruch 6, **dadurch gekennzeichnet, dass** die Polarität des Schweißstromes I und/oder der Schweißspannung U nach einer vordefinierten bzw. einstellbaren Anzahl von Perioden (40, 41) umgeschaltet wird.

8. Verfahren nach Anspruch 6, **dadurch gekennzeichnet, dass** die Polarität des Schweißstromes I und/oder der Schweißspannung U nach einer veränderlichen bzw. variablen Anzahl von Perioden (40, 41) aperiodisch bzw. unregelmäßig umgeschaltet wird.

9. Verfahren nach Anspruch 8, **dadurch gekennzeichnet, dass** der Zeitpunkt der Umschaltung der Polarität des Schweißstromes I und/oder der Schweißspannung U in Abhängigkeit zumindest eines vor dem Schweißprozess eingestellten oder während des Schweißprozesses erfassten Schweißprozessparameters, wie beispielsweise dem Schweißstrom I, einem Parameter für die Wärmeeinbringung, dem Material des Werkstücks (16), dem Material des Schweißdrahtes (13), dem verwendeten Schutzgas, und/oder einem Schweißspalt im Werkstück (16) automatisch ermittelt wird.

10. Verfahren nach einem der Ansprüche 1 bis 9, **dadurch gekennzeichnet, dass** zumindest ein Schweißparameter am Schweißgerät (1) manuell ausgewählt bzw. eingestellt wird, und dass der Zeitpunkt der Umschaltung der Polarität des Schweißstromes I und/oder der Schweißspannung U in Bezug auf die Kurzschlussphase (33) in Abhängigkeit dieses zumindest einen Schweißparameters durch die Steuervorrichtung (4) festgelegt wird.

11. Verfahren nach einem der Ansprüche 1 bis 10, **dadurch gekennzeichnet, dass** die Umschaltung der Polarität des Schweißstromes I und/oder der Schweißspannung U in Abhängigkeit einer vorgegebenen Zeitdauer oder durch ein Triggersignal ausgelöst wird.

12. Verfahren nach einem der Ansprüche 1 bis 11, **dadurch gekennzeichnet, dass** in Abhängigkeit der Polarität des Schweißstromes I und/oder der Schweißspannung U die Vorschubgeschwindigkeit V. des Schweißdrahtes (13) verändert bzw. bestimmt wird.

13. Verfahren nach einem der Ansprüche 1 bis 12, **dadurch gekennzeichnet, dass** während einer durch eine Kurzschlussphase (33) und eine Lichtbogenphase (36) gebildeten Periode (40; 41) die Polarität des Schweißstromes I und/oder der Schweißspannung zumindest zwei Mal gesteuert umgeschaltet wird, wobei insbesondere ein Polaritätswechsel während der Lichtbogenphase (36) und ein Polaritätswechsel während der Kurzschlussphase (33) erfolgt.

14. Verfahren nach Anspruch 13, **dadurch gekennzeichnet, dass** die zeitlich gesteuerte Umschaltung der Polarität des Schweißstromes I und/oder der Schweißspannung U während einer Periode (40; 41) in Abhängigkeit von Schweißprozessparametern, beispielsweise einem Parameter der Wärmeeinbringung, dem Schweißstrom I, der Schweißspannung U, einem Parameter der Materialeinbringung, usw., gesteuert wird.

15. Verfahren nach einem der Ansprüche 1 bis 14, **dadurch gekennzeichnet, dass** die Amplitude und/oder Polarität des Schweißstromes I und/oder der Schweißspannung U in Abhängigkeit der ermittelten Breite und/oder Höhe des Spalts zwischen den zu verschweißenden Werkstücken (16) geregelt wird.

16. Verfahren nach einem der Ansprüche 1 bis 15, **dadurch gekennzeichnet, dass** die Amplitude und/oder Polarität des Schweißstromes I und/oder der Schweißspannung U in Abhängigkeit der ermittelten Tiefe des Einbrandes, insbesondere der so genannten Schweißwurzel geregelt wird.

17. Schweißgerät (1), mit einer Schweißstromquelle (2), einer Steuervorrichtung (4), einem Drahtvorschubgerät (11), und einem Schweißbrenner (10), weiters mit einer Ein- und/oder Ausgabevorrichtung (22) und/oder einem Fernregler zur Einstellung bzw. Auswahl zumindest eines Parameters für den Wärmehaushalt oder die Wärmeeinbringung in das zu bearbeitende Werkstück (16), wobei der Ein- und/oder Ausgabevorrichtung (22) und/oder dem Fernregler ein Steuerungsmittel zugeordnet ist, das zur Festlegung der Zeitpunkte eines Wechsels der Polarität des Schweißstromes I und/oder der Schweißspannung U in Abhängigkeit des zumindest einen eingestellten bzw. ausgewählten Parameters für den Wärmehaushalt oder die Wärmeeinbringung ausgebildet ist, **dadurch gekennzeichnet, dass** die Steuer vorrichtung (4) zur Durchführung des Folgen- den Verfahrens so ausgebildet ist, dass während zumindest einiger Kurzschlussphasen (33) die Polarität des Schweißstroms I und/oder Schweißspannung U, umgeschaltet wird, wobei die Amplitude des Schweißstroms I und/oder der Schweißspannung U auf einen definierten Wert eingestellt wird, sodass ein Durchschmelzen des Schweißdrahtes (13) bzw. einer Kurzschlussbrücke unterbunden, jedoch eine sichere Wiederzündung des Lichtbogens (15) beim Abheben des Schweißdrahtes (13) vom Werkstück (16) ermöglicht wird, indem am Ende der Kurzschlussphase (33) bzw. am Beginn der Lichtbogenphase (36) der Lichtbogen (15) lediglich durch den Schweißstrom I und/oder die Schweißspannung U hilfsspannungsquellenlos wiedergezündet wird.

18. Schweißgerät (1) nach Anspruch 17, **dadurch gekennzeichnet, dass** zumindest ein Auswahl- oder Einstellorgan zur direkten oder indirekten Einstellung der Anzahl oder Dauer der Perioden (40, 41) des Schweißstromes I und/oder der Schweißspannung U mit positiver oder negativer Polarität oder der Amplitude des Schweißstromes I und/oder der Schweißspannung U angeordnet ist.

19. Schweißgerät (1) nach Anspruch 17 oder 18, **dadurch gekennzeichnet, dass** ein Speicher zur Hinterlegung von Schweißparametereinstellungen, insbesondere AC-Kurvenformen, Periodendauern, oder dgl. für den Schweißstrom I und/oder der Schweißspannung U angeordnet ist.

20. Schweißgerät (1) nach einem der Ansprüche 17 bis 19, **dadurch gekennzeichnet, dass** das Steuerungsmittel durch eine in einem Datenspeicher der Steuervorrichtung (4) hinterlegte Software bzw. Programmlogik gebildet ist, welcher Datenspeicher zum Verändern bzw. Aufrufen darin gespeicherter Daten mit der Ein- und/oder Ausgabevorrichtung (22) verbunden ist.

## Claims

1. Method for controlling and/or regulating a welding apparatus (1) and a welding current source (2), respectively, with a welding wire (13), wherein after ignition of an electric arc (15), a cold metal transfer (CMT) welding process is conducted, in which the welding wire (13) is conveyed into the direction of the work piece (16) until the former contacts the work piece (16), subsequently, after formation of a short circuit, during a short-circuit phase (33), the wire-conveying direction is reversed and the welding wire (13) is moved away from the work piece (16) until opening of the short circuit, wherein the welding current I and/or the welding voltage U is regulated such that the welding wire (13) melts on, i.e. a drop formation occurs, during an electric-arc phase (36), **characterized in that** during at least some short-circuit phases (33), polarity of the welding current I and/or the welding voltage U is switched, wherein the amplitude of the welding current I and/or the welding voltage U is adjusted to a defined value so that melting-through of the welding wire (13) and a short-circuit bridge, respectively, is prevented, a safe re-ignition of the electric arc (15) when lifting the welding wire (13) off the work piece (16), however, being rendered possible by re-igniting the electric arc (15) only by the welding current I and/or the welding voltage U without any auxiliary voltage, at the end of the short-circuit phase (33) or at the beginning of the electric-arc phase (36).

2. Method according to claim 1, **characterized in that** the welding current I is changed, particularly increased, during the electric-arc phase (36) and, thus, drop formation and/or melting-on of the end of the welding wire (13) occurs.

3. Method according to claim 1 or 2, **characterized in that** during the short-circuit phase (33), the welding current I is changed, wherein, during increasing the welding wire I, the filler material formed by the welding wire (13) is introduced into the melting bath of the work piece (16) and, during reducing the welding wire I, less filler material is introduced into the melting bath of the work piece (16).

4. Method according to any one of claims 1 to 3, **characterized in that** after formation of a short circuit, the wire-conveying direction is reversed and the welding wire (13) is moved away from the work piece (16) until there is a freely selectable or predefined distance (34).

5. Method according to any one of claims 1 to 4, **characterized in that** polarity of the welding current I and/or the welding voltage U is switched after each period (40, 41) formed by one short-circuit phase (33) and one electric-arc phase (36).

6. Method according to any one of claims 1 to 4, **characterized in that** polarity of the welding current I and/or the welding voltage U is switched after several periods (40, 41) each formed by one short-circuit phase (33) and one electric-arc phase (36).

7. Method according to claim 6, **characterized in that** polarity of the welding current I and/or the welding voltage U is switched after a predefined or adjustable number of periods (40, 41).

8. Method according to claim 6, **characterized in that** polarity of the welding current I and/or the welding voltage U is switched aperiodically or irregularly after a changeable and/or variable number of periods (40, 41).

9. Method according to claim 8, **characterized in that** the point in time of switching polarity of the welding current I and/or the welding voltage U is automatically determined on the basis of at least one welding-process parameter which has been adjusted prior to the welding process or detected during the same, such as, e.g., the welding current I, a parameter for heat introduction, the material of the work piece (16), the material of the welding wire (13), the protective gas used and/or a welding gap in the work piece (16).

10. Method according to any one of claims 1 to 9, **characterized in that** at least one welding parameter is manually selected and adjusted on the welding apparatus (1), and **in that** the point in time of switching polarity of the welding current I and/or the welding Voltage U with respect to the short-circuit phase (33) is defined by the control device (4) on the basis of this at least one welding parameter.

11. Method according to any one of claims 1 to 10, **characterized in that** switching polarity of the welding current I and/or the welding voltage U is triggered on the basis of a predefined period or by a trigger signal.

12. Method according to any one of claims 1 to 11, **characterized in that** the feed rate V of the welding wire (13) is changed and determined on the basis of the polarity of the welding current I and/or the welding voltage U.

13. Method according to any one of claims 1 to 12, **characterized in that** during a period (40; 41) formed by a short-circuit phase (33) and an electric-arc phase (36), polarity of the welding current I and/or the welding voltage is switched under control at least twice, wherein, in particular, a polarity change occurs during the electric-arc phase (36) and a polarity change occurs during the short-circuit phase (33).

14. Method according to claim 13, **characterized in that** the timely controlled polarity switch of the welding current I and/or the welding voltage U during a period (40; 41) is controlled on the basis of welding-process parameters, e.g. a parameter of heat introduction, the welding current I, the welding voltage U, a parameter of material introduction, etc.

15. Method according to any one of claims 1 to 14, **characterized in that** the amplitude and/or polarity of the welding current I and/or the welding voltage U is regulated on the basis of the width and/or height of the gap detected between the work pieces (16) to be welded.

16. Method according to any one of claims 1 to 15, **characterized in that** the amplitude and/or polarity of the welding current I and/or the welding voltage U is regulated on the basis of the depth of the weld penetration detected, in particular of the socalled welding root.

17. Welding apparatus (1) with a welding current source (2), a control device (4), a wire feeder (11) and a welding torch (10), further including an input and/or output device (22) and/or a remote control for adjusting and/or selecting at least one parameter for heat balance or heat introduction into the work piece (16) to be processed, wherein a control means is assigned to the input and/or output device (22) and/or the remote control, which is designed for setting the points in time for changing polarity of the welding current I and/or the welding voltage U on the basis of the at least one adjusted and/or selected parameter for heat balance or heat introduction, **characterized in that** for carrying out the following method the control device (4) is designed such that during at least some short-circuit phases (33) polarity of the welding current I and/or the welding voltage U is switched, with the amplitude of the welding current I and/or the welding voltage U being set to a defined value, so a melting-through of the welding wire (13) and/or a short-circuit bridge is prevented, a safe re-ignition of the electric arc (15) when lifting the welding wire (13) off the work piece (16), however, being rendered possible by re-igniting the electric arc (15) only by the welding current I and/or the welding voltage U without any auxiliary voltage, at the end of the short-circuit phase (33) or at the beginning of the electric-arc phase (36).

18. Welding apparatus (1) according to claim 17, **characterized in that** at least one selecting or adjusting means is arranged for directly or indirectly adjusting the number or duration of the periods (40, 41) of the welding current I and/or the welding voltage U with positive or negative polarity, or the amplitude of the welding current I and/or the welding voltage U.

19. Welding apparatus (1) according to claim 17 or 18, **characterized in that** a memory is arranged for depositing welding parameter settings, particularly AC curve shapes, period durations or the like, for the welding current I and/or the welding voltage U.

20. Welding apparatus (1) according to any one of claims 17 to 19, **characterized in that** the control means is formed by a software and programme logic; respectively, deposited in the data memory of the control device (4), said data memory being connected to the input and/or output device (22) for changing or retrieving the data stored in said memory.

## Revendications

1. Procédé pour commander et/ou régler un appareil de soudage (1) ou une source de courant de soudage (2), avec un fil de soudage (13), dans lequel un processus de soudage par transfert de métal à froid (Cold Metal Transfert, CMT) est effectué après l'allumage d'un arc électrique (15), processus lors duquel le fil de soudage (13) est acheminé en direction de la pièce à usiner (16) jusqu'à entrer en contact avec la pièce à usiner (16), le sens d'acheminement du fil est ensuite inversé après la formation d'un court-circuit, pendant une phase de court-circuit (33), et le fil de soudage (13) est éloigné de la pièce à usiner (16) jusqu'à l'interruption du court-circuit, dans lequel le courant de soudage I et/ou la tension de soudage U sont réglés de telle sorte que, pendant une phase d'arc électrique (36), se produit une fusion du fil de soudage (13), donc une formation de gouttes, **caractérisé en ce que**, pendant au moins quelques phases du court-circuit (33), la polarité du courant de soudage I et/ou de la tension de soudage U est inversée, dans lequel l'amplitude du courant de soudage I et/ou de la tension de soudage U est réglée sur une valeur définie, de sorte qu'une fusion complète du fil de soudage (13) ou d'un pontage de court-circuit est empêchée, un rallumage sûr de l'arc électrique (15) étant néanmoins rendu possible lors du retrait du fil de soudage (13) de la pièce à usiner (16) du fait que, à la fin de la phase du court-circuit (33) ou au début de la phase d'arc électrique (36), l'arc électrique (15) est rallumé sans source de tension auxiliaire, uniquement par le courant de soudage I et/ou la tension de soudage U.

2. Procédé selon la revendication 1, **caractérisé en ce que** le courant de' soudage I est modifié, en particulier augmenté, pendant la phase d'arc électrique (36) et il se produit ainsi une formation de gouttes ou une fusion sur l'extrémité du fil de soudage (13).

3. Procédé selon la revendication 1 ou 2, **caractérisé en ce que** le courant de soudage I est modifié pendant la phase de court-circuit (33) dans lequel, lors d'une élévation du courant de soudage I, le matériau supplémentaire formé par le fil de soudage (13) est introduit dans le bain de fusion de la pièce (16) et, lors d'une réduction du courant de soudage I, moins de matériau supplémentaire est introduit dans le bain de fusion de la pièce à usiner (16).

4. Procédé selon l'une des revendications 1 à 3, **caractérisé en ce que**, après la formation d'un court-circuit, le sens d'acheminement du fil est inversé et le fil de soudage (13) est éloigné de la pièce à usiner (16) jusqu'à une distance (34) pouvant être choisie librement ou prédéfinie.

5. Procédé selon l'une des revendications 1 à 4, **caractérisé en ce que** la polarité du courant de soudage I et/ou de la tension de soudage U est inversée après chaque période (40, 41) formée par respectivement une phase de court-circuit (33) et une phase d'arc électrique (36).

6. Procédé selon l'une des revendications 1 à 4, **caractérisé en ce que** la polarité du courant de soudage I et/ou de la tension de soudage U est inversée après plusieurs périodes (40, 41) formées par respectivement une phase de court-circuit (33) et une phase d'arc électrique (36).

7. Procédé selon la revendication 6, **caractérisé en ce que** la polarité du courant de soudage I et/ou de la tension de soudage U est inversée après un nombre prédéfini ou réglable de périodes (40, 41).

8. Procédé selon la revendication 6, **caractérisé en ce que** la polarité du courant de soudage I et/ou de la tension de soudage U est inversée de façon apériodique ou irrégulière après un nombre modifiable respectivement variable de périodes (40, 41).

9. Procédé selon la revendication 8, **caractérisé en ce que** l'instant de l'inversion de la polarité du courant de soudage I et/ou de la tension de soudage U est automatiquement déterminé en fonction d'au moins un paramètre de processus de soudage réglé avant le processus de soudage ou saisi pendant le processus de soudage, comme par exemple le courant de soudage I, un paramètre pour l'apport de chaleur, le matériau de la pièce à usiner (16), le matériau du fil de soudage (13), le gaz protecteur utilisé et/ou une fente de soudage dans la pièce à usiner (16).

10. Procédé selon l'une des revendications 1 à 9, **caractérisé en ce qu'**au moins un paramètre de soudage est choisi ou réglé manuellement sur l'appareil de soudage (1), et **en ce que** l'instant de l'inversion de la polarité du courant de soudage I et/ou de la tension de soudage U est défini par le dispositif de commande (4) relativement à la phase de court-circuit (33) et en fonction de ce au moins un paramètre de soudage.

11. Procédé selon l'une des revendications 1 à 10, **caractérisé en ce que** l'inversion de la polarité du courant de soudage I et/ou de la tension de soudage U est déclenchée en fonction d'une durée de temps prédéfinie ou par un signal déclencheur.

12. Procédé selon l'une des revendications 1 à 11, **caractérisé en ce que** la vitesse d'avancement V du fil de soudage (13) est modifiée ou déterminée en fonction de la polarité du courant de soudage I et/ou de la tension de soudage U.

13. Procédé selon l'une des revendications 1 à 12, **caractérisé en ce que** la polarité du courant de soudage I et/ou de la tension de soudage est inversée au moins deux fois de façon commandée pendant une période (40 ; 41) formée par une phase de court-circuit (33) et une phase d'arc électrique (36), dans lequel en particulier se produisent un changement de polarité pendant la phase d'arc électrique (36) et un changement de polarité pendant la phase de court-circuit (33).

14. Procédé selon la revendication 13, **caractérisé en ce que** l'inversion commandée dans le temps de la polarité du courant de soudage I et/ou de la tension de soudage U est commandée pendant une période (40 ; 41) en fonction de paramètres de processus de soudage, par exemple un paramètre de l'apport de chaleur, le courant de soudage I, la tension de soudage U, un paramètre d'apport de matériau, etc.

15. Procédé selon l'une des revendications 1 à 14, **caractérisé en ce que** l'amplitude et/ou la polarité du courant de soudage I et/ou de la tension de soudage U sont réglées en fonction de la largeur et/ou de la hauteur déterminées de la fente entre les pièces à usiner (16) à souder.

16. Procédé selon l'une des revendications 1 à 15, **caractérisé en ce que** l'amplitude et/ou la polarité du courant de soudage I et/ou de la tension de soudage U est/sont réglées en fonction de la profondeur déterminée de la pénétration, en particulier de ce que l'on appelle la racine de soudage.

17. Appareil de soudage (1), avec une source de courant de soudage (2), un dispositif de commande (4), un appareil d'avancement de fil (11) et un chalumeau de soudage (10), également avec un dispositif d'entrée et/ou de sortie (22) et/ou un télérégulateur pour le réglage ou le choix d'au moins un paramètre pour la régulation thermique ou l'apport de chaleur dans la pièce à usiner (16) à traiter, dans lequel un moyen de commande est attribué au dispositif d'entrée et/ou de sortie (22) et/ou au télérégulateur, lequel moyen de commande est conçu pour la fixation des instants d'un changement de polarité du courant de soudage I et/ou de la tension de soudage U en fonction du au moins un paramètre réglé ou choisi pour la régulation thermique ou l'apport de chaleur, **caractérisé en ce que** le dispositif de commande (4) est conçu pour l'exécution du procédé suivant, de telle sorte que pendant au moins quelques phases de court-circuit (33), la polarité du courant de soudage I et/ou de la tension de soudage U est inversée, dans lequel l'amplitude du courant de soudage I et/ou de la tension de soudage U est réglée sur une valeur définie, de sorte qu'une fusion complète du fil de soudage (13) ou d'un pontage de court-circuit est empêchée, un rallumage sûr de l'arc électrique (15) étant néanmoins rendu possible lors du retrait du fil de soudage (13) de la pièce à usiner (16) du fait que, à la fin de la phase de court-circuit (33) ou au début de la phase d'arc électrique (36), l'arc électrique (15) est rallumé sans source de tension auxiliaire, uniquement par le courant de soudage I et/ou la tension de soudage U.

18. Appareil de soudage (1) selon la revendication 17, **caractérisé en ce qu'**au moins un organe de sélection ou de réglage est mis en place pour le réglage direct ou indirect du nombre ou de la durée des périodes (40, 41) du courant de soudage I et/ou de la tension de soudage U avec polarité positive ou négative, ou de l'amplitude du courant de soudage I et/ou de la tension de soudage U.

19. Appareil de soudage (1) selon la revendication 17 ou 18, **caractérisé en ce qu'**est mise en place une mémoire pour le dépôt de réglages de paramètres de soudage, en particulier de formes de courbe CA, de durées de période ou similaires pour le courant de soudage I, et/ou de la tension de soudage U.

20. Appareil de soudage (1) selon l'une des revendications 17 à 19, **caractérisé en ce que** le moyen de commande est formé par un logiciel ou une logique de programme déposé dans une mémoire de données du dispositif de commande (4), laquelle mémoire de données est reliée au dispositif d'entrée et/ou de sortie (22) pour la modification ou l'appel de données mémorisée à l'intérieur.
